# EUROPÄISCHE PATENTSCHRIFT

(11) **EP 1 089 895 B1**
(45) Veröffentlichungstag und Bekanntmachung des Hinweises auf die Patenterteilung: **18.08.2004**
(21) Anmeldenummer: 99929285.7
(22) Anmeldetag: 18.06.1999
(51) Int. Cl.: B60L 15/20, H02P 21/00

(54) **VERFAHREN ZUR REGELUNG EINER ELEKTRISCHEN MASCHINE**
METHOD FOR REGULATING AN ELECTRICAL MOTOR
PROCEDE POUR REGULER UN MOTEUR ELECTRIQUE

(30) Priorität: 25.06.1998 DE 19828353
(43) Veröffentlichungstag der Anmeldung: 11.04.2001
(73) Patentinhaber: ZF FRIEDRICHSHAFEN Aktiengesellschaft, 88038 Friedrichshafen (DE)
(72) Erfinder: VOSS, Thomas, D-88069 Tettnang (DE); HELLWIG, Bert, D-88045 Friedrichshafen (DE); KARCH, Gerald, D-88045 Friedrichshafen (DE); MÜLLER, Bernd, D-88046 Friedrichshafen (DE); WOLFGANG, Werner, D-88213 Ravensburg (DE)
(86) Internationale Anmeldenummer: PCT/EP1999/004261
(87) Internationale Veröffentlichungsnummer: WO 1999/067104

(56) Entgegenhaltungen:
- EP-A- 0 243 960
- FR-A- 2 701 436
- US-A- 5 453 930

## Beschreibung

Die Erfindung betrifft ein Verfahren zur Momentenregelung einer elektrischen Maschine nach dem Oberbegriff des Anspruchs 1.

Moderne elektrische Antriebsmotoren insbesondere für den Antrieb von Fahrzeugen müssen zum Erreichen eines günstigen Kosten/Nutzen-Verhältnisses hoch ausgenutzt werden. Um die Belastung der hoch ausgenutzten elektrischen Maschine gering zu halten, muß die Maschine möglichst verlustarm betrieben werden. Bei der Anwendung elektrischer Maschinen als Antriebsmaschinen für Fahrzeuge wird beim Anfahren ein besonders hohes abzugebendes Moment angefordert. Derzeit bekannte Lösungen lassen eine Momentenregelung beim Anfahren nur unpräzise zu.

Asynchronmaschinen als eine Form der elektrischen Maschine sind in der Antriebstechnik weit verbreitet und werden für die vielseitigsten Anforderungen angewendet. Aufgrund ihres einfachen Aufbaus sind sie sehr robust, waren aber in der Vergangenheit einer Drehzahlregelung nur erschwert zugänglich und wurden überwiegend an fester Spannung und fester Frequenz mit im wesentlichen gleicher Drehzahl betrieben. In der Vergangenheit wurden für drehzahlgeregelte Antriebe überwiegend fremderregte Gleichstrommaschinen verwendet.

Wechselrichterantriebe neuerer Prägung ermöglichen auch für Asynchronmaschinen eine zufriedenstellende Drehzahlregelung. Dabei werden die Maschinen mit einem quasi konstanten Magnetfeld gefahren. Von außen wird der Maschine ein Moment fest vorgegeben. Bei konstantem Magnetfeld wird das Ausgangsmoment der Maschine verstellt, wobei der Feldstrom momentenunabhängig eingeprägt wird. Eine Beachtung der Optimierung des Wirkungsgrades findet dabei nicht statt. Eine saubere Momentenregelung insbesondere im Stillstand ist bei Spannungs-Frequenz-Steuerungen nicht möglich.

Die EP 0 243 960 A1 offenbart ein Verfahren zur Regelung eines Drehstrom-Asynchronmotors mit Kurzschlußläufer zum Antrieb wenigstens eines Motors, eines zumindest zeitweise elektrisch angetriebenen Fahrzeugs, mit Mitteln zur Feststellung der Drehzahl des Elektromotors und des vom Elektromotor geforderten Drehmoments und mit einer Steuereinrichtung, wobei in Abhängigkeit von Drehzahl und gefordertem Moment in der Steuereinrichtung Wertepaare aus drehmomenterzeugendem Ankerstrom und magnetfelderzeugendem Feldstrom ermittelt werden, und die dem Elektromotor zum verlustoptimierten Antrieb zugeführt werden. Bei diesem Verfahren ist es jedoch erforderlich, Momentenstrom und Schlupf zu berechnen. Eine fest vorgegebene und gespeicherte Zuordnung von Stromwerten in Abhängigkeit von Drehzahl und Drehmoment ist nicht möglich. Eine Feld- und Ankerstrom-Wertepaar-Zuordnung, die für eine Motor-Vektor-Steuerung benötigt wird, ist aus dem Stand der Technik ebenfalls bekannt. Dabei müssen die Stromwerte ständig neu berechnet werden, um dem Motor geeignete Betriebsströme zuführen zu können, welche zu einem verlustoptimierten Betrieb des Drehstrommotors führen. Dadurch kann es zu Verzögerungen im Ansprechverhalten und zu einer ungleichen Verteilung der Verluste kommen.

Der Erfindung liegt die Aufgabe zugrunde, die Verluste einer hochausgenutzten elektrischen Maschine zu reduzieren und das abgegebene Moment der Maschine möglichst präzise zu regeln.

Die Aufgabe wird gelöst durch ein Verfahren mit den Merkmalen des Anspruchs 1. Ausgestaltungen sind Gegenstand von Unteransprüchen.

Das erfindungsgemäße Verfahren sieht vor, daß der elektrischen Drehstrom-Maschine kein Moment fest vorgegeben wird, sondern aus einer Wertematrix fest zugeordnete und voneinander abhängige Strompaare verwendet werden, die abhängig vom jeweiligen Fahrzustand sind. In dieser Matrix ist jedem angeforderten Moment und jeder Drehzahl des Motors ein fest vorgegebenes Stromwertepaar zugeordnet. Die beiden Vektoren des Stromwertepaares sollen möglichst senkrecht aufeinanderstehen. Eine erste Komponente des Wertepaares ist der Ankerstrom IQ, der momentenerzeugend ist, und die senkrecht dazu stehende zweite Komponente des Wertepaares ist der Feldstrom ID, der das magnetisches Feld erzeugt.

Sowohl die Verluste im Stator als auch die Verluste im Rotor des Elektromotors stellen eine Funktion von Ankerstrom IQ, Feldstrom ID und der Drehzahl des Motors dar. Mit zunehmendem Feldstrom ID sinken die Verluste im Rotor und die Verluste im Stator nehmen zu. Damit ergibt sich für jedes angestrebte Drehmoment und jede Drehzahl ein optimiertes Stromwertepaar, bei dem die Summe der Verluste minimiert wird.
Da die Verluste aus Rotor und Stator unterschiedlich gravierend sind, wird eine Gewichtung der Verluste vorgenommen. Die Verluste des Rotors werden als die gravierenderen Verluste dabei mit einer höheren Gewichtung versehen. Zur Minimierung der Verluste wird angestrebt, genau einen Punkt zu erreichen, in dem der Motor optimal gefahren werden kann. In Abhängigkeit vom Feldstrom ID werden die Verluste im Rotor und Stator bestimmt. Für jede Drehzahl wird der Feldstrom ID bestimmt, der das Verlustminimum festlegt. Um das vom Fahrer des Fahrzeugs beispielsweise über ein Pedal angeforderte Moment bereitzustellen, muß der Momentenstrom IQ entsprechend ausgelegt werden. Dadurch ergibt sich das Wertepaar IQ, ID für jeden Betriebspunkt der Maschine. Für jedes Moment und für jede Drehzahl steht ein Wertepaar IQ, ID zur Verfügung, das beispielsweise in einem elektronischen Speicher abgelegt wird. Dieses jeweilige Wertepaar entspricht dann dem Betriebspunkt der Maschine mit der optimalen Verteilung der Verluste. Für jede anliegende Drehzahl und für jedes angeforderte Moment steht das Wertepaar bereit, mit dem die Maschine das angeforderte Moment liefern kann und die Verluste optimiert sind.

Durch die Zuordnung der Wertepaare und die Gewichtung der Verluste läßt sich auch eine Beeinflussung der Wärmeverteilung und thermischen Beanspruchung in der Maschine so vornehmen, daß eine Überbeanspruchung der hoch ausgenutzten Maschine vermieden wird. Im Rotor sind entstehende Wärmemengen sehr viel schwieriger abzuführen als im Stator, deshalb liegt die Gewichtung auch hier auf dem Rotor höher. Durch die Möglichkeit der Wärmeabführung des Rotors lediglich über die Lager der Rotorwelle, ist dessen Wärmeabfuhr sehr beschränkt.

Insbesondere im Stillstand läßt sich mit dem erfindungsgemäßen Verfahren eine schnelle und genaue Momenteneinprägung vornehmen und ein stabiles Moment zur Verfügung stellen. Das Verhalten des Fahrzeugs entspricht auf diese Weise dem Verhalten eines konventionellen Fahrzeugs mit Verbrennungsmotor, bei dem über die Treibstoffzuführung ein Drehmoment vorgegeben wird.

Mit dem Verfahren wird beim Vorhandensein von mehreren Antriebsmotoren jeder einzelne Antriebsmotor eines elektrischen Fahrzeuges angesteuert. Durch die Regelung des Momentes und nicht der Drehzahl der einzelnen Antriebsräder wird auch im Gegensatz zu einer Drehzahlregelung eine Differentialwirkung erreicht.

Der Wirkungsgrad der hoch ausgenutzten Maschine wird erhöht. Gerade bei häufigem Stop-and-Go-Verkehr und im Teillastbereich findet eine bessere Ausnutzung und Kraftstoffreduzierung statt. Im elektrifizierten Bahnverkehr spielte Kraftstoffreduzierung bei einem stabilen elektrischen Netz mit ausreichenden Reserven keine Rolle, ebensowenig bei elektrischen Werkzeugmaschinen, die an einem stabilen Verbundnetz hängen. Eine Sensibilisierung auf Verbrauchsreduzierung findet erst seit der konkreten Betrachtung einer elektrischen Maschine am Fahrzeug und damit verbundenen Emissionen statt. Somit findet ein Verbrauchs- und Emissionsvergleich eines elektrischen Fahrzeugs mit Verbrennungsmotor und -generator mit einem Fahrzeug mit Verbrennungsmotor und konventionellem Antriebsstrang statt.

Das vorgeschlagene Verfahren führt zu einer genauen und schnellen Momenteneinprägung insbesondere im Stillstand und erbringt insbesondere in hochausgenutzten elektrischen Maschinen eine Verlustoptimierung. Erzielt wird eine Erhöhung des Antriebswirkungsgrades und eine Reduzierung von Motorerwärmung und Energieverbrauch. Es findet eine Optimierung des Gesamtsystems statt, die auch in einer Absenkung der Dieselmotordrehzahlen bei dieselelektrischer Betriebsart und damit verbunden zu einer Absenkung von Geräuschen führt.

Grundsätzlich läßt sich das vorgeschlagene Verfahren bei jedem elektrischen Antrieb auch unabhängig von einem Fahrzeug verwenden. Energieeinsparbedürfnisse bei elektrischen Maschine, die unabhängig von einem starren Netz betrieben werden, haben derzeit jedoch noch höhere Aufmerksamkeit, als beispielsweise an einem Verbundnetz hängende Werkzeugmaschinen.

## Patentansprüche

1. Verfahren zur Regelung eines Drehstrom-Asynchronmotors mit Kurzschlußläufer zum Antrieb wenigstens eines Motors eines zumindest zeitweise elektrisch angetriebenen Fahrzeugs, mit Mitteln zur Feststellung der Drehzahl des Elektromotors und des vom Elektromotor geforderten Drehmomentes und mit einer Steuereinrichtung, wobei in Abhängigkeit von Drehzahl und gefordertem Moment in der Steuereinrichtung Wertepaare aus drehmomenterzeugendem Ankerstrom (IQ) und magnetfelderzeugendem Feldstrom (ID) ermittelt werden und diese dem Elektromotor zum verlustoptimierten Antrieb zugeführt werden, **dadurch gekennzeichnet, dass** die Wertepaare in der Steuereinrichtung für jedes geforderte Drehmoment und für jede Drehzahl des Elektromotors als ein fest vorgegebenes Wertepaar (IQ, ID) gespeichert sind.

2. Verfahren zur Regelung eines Drehstrom-Asynchronmotors nach Anspruch 1, **dadurch gekennzeichnet, dass** an Elektromotoren einzeln angetriebener Räder zur Erzielung einer Differentialwirkung unterschiedliche Stromwertepaare zur Erzielung unterschiedlicher Momente vorgegeben werden.

## Claims

1. Method for controlling a three-phase induction motor with squirrel-cage rotor for driving at least one motor of a vehicle that is electrically driven at least at times, with means for determining the speed of the electric motor and the torque required by the electric motor and with a control device, value pairs of the torque-generating armature current (IQ) and magnetic-field-generating field current (ID) being determined in the control device depending on the speed and torque required and these being supplied to the electric motor for loss-optimized driving, **characterized in that** the value pairs are stored in the control device for each torque required and for each speed of the electric motor as a fixedly predetermined value pair (IQ, ID).

2. Method for controlling a three-phase induction motor according to claim 1, **characterized in that** different current value pairs for achieving different torques are predetermined at electric motors of individually driven wheels to achieve a differential effect.

## Revendications

1. Procédé de régulation d'un moteur asynchrone à courant triphasé avec des rotors en court-circuit pour entraîner au moins un moteur d'un véhicule au moins partiellement de manière électrique, avec des moyens de détermination de la vitesse de rotation du moteur électrique et du couple de rotation développé par le moteur électrique et avec un dispositif de commande, des paires de valeurs, constituées d'un courant d'induit (IQ) produisant le couple de rotation et d'un courant de champ (ID) produisant le champ magnétique, étant déterminées dans le dispositif de commande et introduites dans le moteur pour un entraînement optimisé en ce qui concerne les pertes, en fonction de la vitesse de rotation et du couple développé, **caractérisé en ce que** les paires de valeurs sont enregistrées dans le dispositif de commande pour chaque couple de rotation développé et pour chaque vitesse de rotation du moteur électrique comme une paire de valeurs (IQ, ID) prédéterminée.

2. Procédé de régulation d'un moteur asynchrone à courant triphasé selon la revendication 1, **caractérisé en ce que** des roues entraînées individuellement sont prévues sur des moteurs électriques pour obtenir une action différentielle de différentes paires de valeurs de courant afin d'obtenir des couples différents.
